# EUROPÄISCHE PATENTSCHRIFT

(11) **EP 1 911 930 B1**
(45) Veröffentlichungstag und Bekanntmachung des Hinweises auf die Patenterteilung: **11.12.2013**
(21) Anmeldenummer: 05794193.2
(22) Anmeldetag: 07.10.2005
(51) Int. Cl.: F01C 1/07, F01C 1/067

(54) **DREHFLÜGELANTRIEB ODER VERBRENNUNGSMOTOR**
VANE-TYPE ROTARY ACTUATOR OR AN INTERNAL COMBUSTION MACHINE
MOTEUR ROTATIF OU MACHINE ROTATIVE A COMBUSTION INTERNE A AILETTES ET REDUCTEUR

(30) Priorität: 22.07.2005 UA 2005007283
(43) Veröffentlichungstag der Anmeldung: 16.04.2008
(73) Patentinhaber: Samko, Ivan, Kievskaya obl. 08800 (UA); Samko, Svyatoslav, Kievskaya obl. 08800 (UA)
(72) Erfinder: BUBLIKOV, Volodimir, Kievskaya obl., 08800 (UA)
(74) Vertreter: Jeck, Anton
(86) Internationale Anmeldenummer: PCT/UA2005/000044
(87) Internationale Veröffentlichungsnummer: WO 2007/011318

(56) Entgegenhaltungen:
- WO-A-2004/067914
- WO-A-2007/097733
- DE-A1- 3 623 969
- DE-C- 641 476
- FR-A- 758 160
- RU-C1- 2 097 586
- RU-C2- 2 193 675
- US-A- 3 398 643
- US-A- 3 730 654
- US-A- 3 769 946
- US-A- 4 057 374
- US-B1- 6 446 595

## Beschreibung

Die Erfindung betrifft einen Umlaufmotor (Rotationsverbrennungsmotor) nach dem Oberbegriff des Anspruchs 1.

Aus der US 3 398 643 A und der US 3 623 969 A1 sind Umlaufmotoren bekannt, die neben einem Stator zwei Rotoren aufweisen, die über ein Reduziergetriebe miteinander gekoppelt sind. Das Getriebe weist unrunde Zahnräder auf, die keinen erhöhten Wirkungsgrad für den Umlaufmotor gewährleisten.

Dasselbe gilt auch für die US 6 446 595 B1, die US 3 769 946, die US 4 057 374, die FR 758 160, die DE 641 476, die DE 3 623 969 A1, die US 3 730 654 und die WO 2007/097733 A1, auch wenn in diesen Druckschriften gelegentlich Doppelzahnräder verwendet sind.

Als Prototyp für den Umtauschmotor der Erfindung ist ein Schaufelmotor nach der US 5 083 539 verwendet, der eine kinematische Verbindung der Schaufeln durch elliptische Zahnräder vorsieht. Diese Maschine besteht aus einem Stator, zwei Rotoren auf einer Achse mit je zwei Schaufeln und einer Hauptwelle. Die Hauptwelle ist mit den Rotorwellen durch zwei Paare nicht runder Zahnräder gekoppelt.

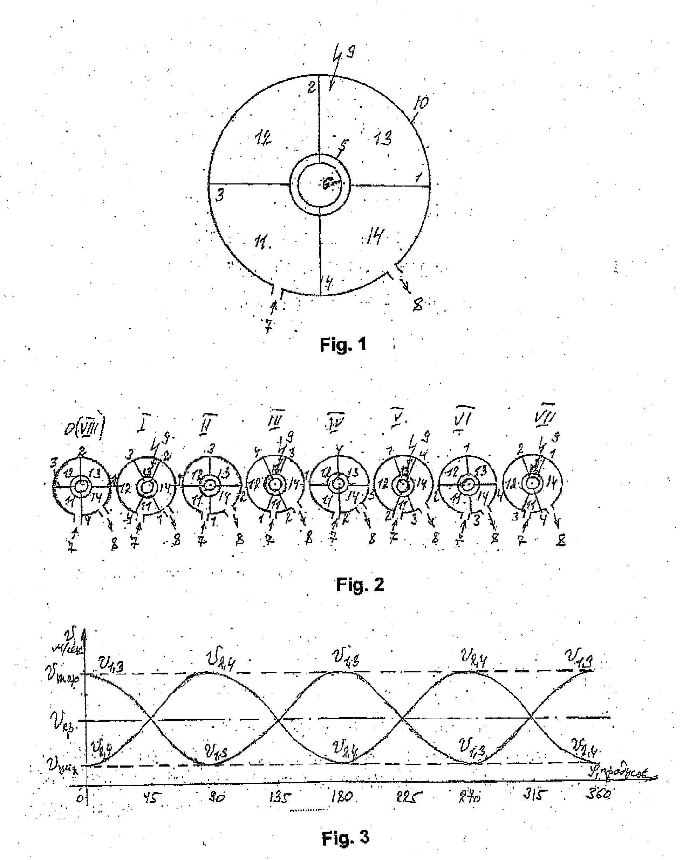

Das Konstruktions- und Arbeitsprinzip des Umlaufmotors, der als Prototyp übernommen wurde, ist in den Fig. 1, 2 und 3 schematisch dargestellt. In Fig. 1 sind die Hauptkomponenten des Umlaufmotors gezeigt. In Fig. 2 sind acht Phasen der gegenseitigen Stellung der Rotorschaufeln während einer vollen Umdrehung der Welle gezeigt. In Fig. 3 ist die Veränderung der Drehgeschwindigkeit der Rotorwellen je nach der Phase der Umdrehung der Rotorwellen dargestellt.

Die auf einer Achse angeordneten Zwei-Schaufel-Rotoren drehen sich um die unbewegliche Drehachse des Motors in einer Richtung mit einer variablen Winkelgeschwindigkeit. Jedes Schaufelpaar 1 und 3, 2 und 4 ist unbeweglich auf einer Welle 5 bzw. 6 angeordnet. Deren Drehgeschwindigkeit wechselt von einem Minimum zu einem Maximum und umgekehrt zweimal in einer vollen Umdrehung der Welle mit 90° Phasenverschiebung zueinander. Es werden folgende Bezeichnungen für die Motorenelemente und -zonen verwendet:
- 1, 3: sind Schaufeln des ersten auf der Welle 5 unbeweglich angeordneten Rotors;
- 2, 4: sind Schaufeln des zweiten auf der Welle 6 unbeweglich angeordneten Rotors;
- 5, 6: sind entsprechende Wellen des ersten und zweiten Rotors, jeder Rotor ist einzeln gelagert (nicht bezeichnet);
- 7, 8: sind Einlassöffnung 7 und Auslassöffnung 8 zur Zufuhr der Brennmischung (Luft) und zum Auslass der Abgase;
- 9: ist die Zündkerze (bei Vergasermotoren) oder die Düse zum Einspritzen des Dieselbrennstoffs (bei Dieselmotoren);
- 10: ist die innere, zylindrische Arbeitsoberfläche des Motorblocks (des Stators);
- 11, 12, 13, 14: sind die Einsaugkammer 11, die Verdichtungskammer 12, die Verbrennungs- und Ausdehnungskammer 13 sowie die Auspuffkammer 14, die gleichzeitig in verschiedenen, räumlichen Zylinderzonen des Motors durch die gegenseitige Stellung der Rotorschaufeln entstehen;
- V1 und V3: sind die Drehgeschwindigkeiten der Schaufeln (1 und 3) des ersten Rotors;
- V2 und V4: sind Drehgeschwindigkeiten der Schaufeln (2 und 4) des zweiten Rotors.

Das Verhältnis der Abmessungen der großen und kleinen Achse der elliptischen Zahnräder bestimmt eine Reihe von Parametern des als Prototyp übernommenen Umlaufmotors:
1) den Verdichtungsgrad der Arbeitsmischung in der Verdichtungskammer 12 und den Druck des Arbeitsmittels in der Verbrennungs- und Ausdehnungskammer 13;
2) die Größe der Drehmomente der Rotorwellen 5 und 6 und der Hauptwelle 19 in jeder Phase der Umdrehung und Wechselwirkung dieser Rotorwellen;
3) das Verhältnis zwischen der maximalen Drehgeschwindigkeit und der minimalen Drehgeschwindigkeit der Rotoren.

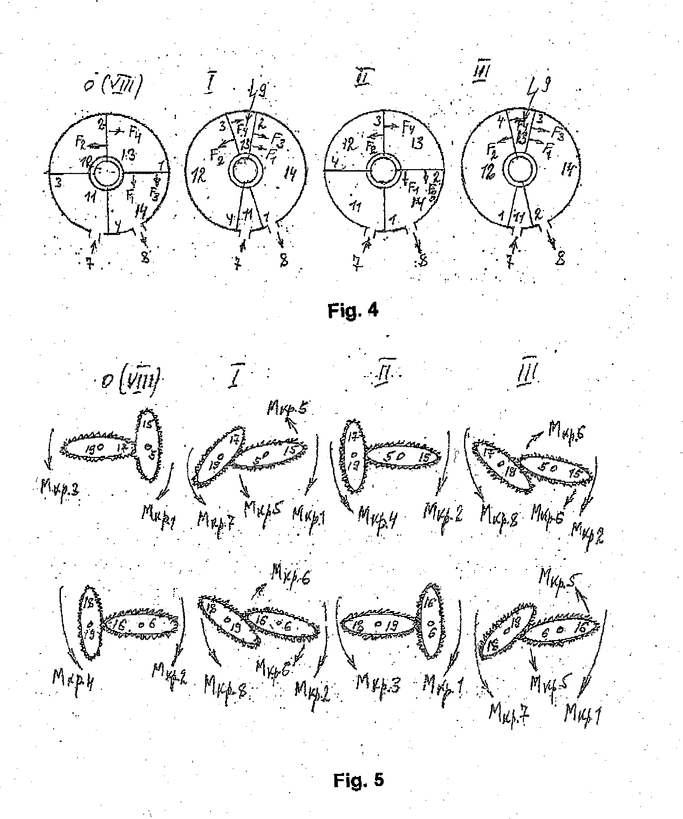

Der Erreichungsgrad der optimalen Werte der genannten Parameter bestimmt das Wirksamkeitsniveau der Motorarbeit. Der Nachteil des Prototyps besteht in der Gefahr des Eingriffs in den bestimmten Phasen der Wechselwirkung der elliptischen Zahnräder. Mit der Vergrößerung des Verhältnisses zwischen den Abmessungen der großen Achse und der kleinen Achse der elliptischen Zahnräder nimmt eine solche Gefahr zu. Dies wird zu einem wichtigen Hemmungsfaktor zur Erhöhung der Wirksamkeit der Motorarbeit. In Fig. 4 sind vier von acht Phasen der gegenseitigen Stellung der Rotorschaufeln und die entsprechenden Phasen der gegenseitigen Stellung der elliptischen Zahnräder (Fig. 5) beispielhaft dargestellt. Es sind folgende Bezeichnungen der Elemente, der Kräfte und der Drehemomente des Motors in Ergänzung zu den oben genannten Bezeichnungen verwendet:
- 15, 16: sind die elliptischen Zahnräder, die auf den entsprechend Wellen 5 und 6 des ersten Rotors und des zweiten Rotors unbeweglich angeordnet sind;
- 17, 18: sind die elliptischen Steuerzahnräder, die auf der Abtriebshauptwelle 19 des Motors unbeweglich angeordnet sind;
- 19: ist die Abtriebshauptwelle des Motors; auf der Hauptwelle 19 sind die elliptischen Steuerzahnräder 17 und 18 unter einem Winkel von 90° zueinander unbeweglich angeordnet; die Zahnräder 17 und 18 der Hauptwelle 19 sind kinematisch mit den elliptischen Zahnrädern 15 und 16 der Rotorwellen 5 und 6 gekoppelt;
- F1, F2: sind die primären Kräfte des Drucks des Arbeitsmittels auf die beiden Motorschaufeln in der Verbrennungs- und Ausdehnungskammer; sie sind nach dem absoluten Wert gleich, haben aber eine entgegengesetzte Ausrichtung (F1 gewährleistet das Drehen der Schaufeln, der Wellen und der Zahnräder in der vorgegebenen Richtung, die zur Sicherung der Motorarbeit notwendig ist, und F2 gewährleistet das Drehen der Schaufeln in der entgegengesetzten Richtung, wodurch die Motorarbeit in gewissem Maße gebremst und die Leistung vermindert wird);
- F3, F4: sind die sekundären Kräfte, die bei der Wechselwirkung der Steuerzahnräder 17 und 18 der Hauptwelle 19 mit den Zahnrädern 15 und 16 der Wellen 5 und 6 der Rotoren entstehen; sie fallen in ihrer Richtung zusammen und gewährleisten das Drehen der Schaufeln, der Wellen und der Zahnräder in der zur Sicherung der Motorarbeit benötigten Richtung;
- M1, M2: sind Drehmomente, die unter der Einwirkung der Druckkräfte des Arbeitsmittels auf die entsprechenden Motorschaufeln entstehen und beim Drehen der Wellen 5 und 6 der Rotoren und der darauf unbeweglich aufgesetzten Zahnräder 15 und 16 auf die Steuerzahnräder 17 und 18 der Hauptwelle 19 übertragen werden; sie fallen in der Richtung zusammen und gewährleisten das Drehen der Schaufeln, der Wellen und der Zahnräder in der zur Sicherung der Motorarbeit benötigten Richtung;
- M3, M4: sind Drehmomente, die bei der Wechselwirkung der Steuerzahnräder 17 und 18 der Hauptwelle 19 mit den Zahnrädern 15 und 16 der Wellen 5 und 6 der Rotoren entstehen; sie werden von der Hauptwelle 19 auf die Wellen 5 und 6 der Rotoren übertragen, fallen in der Richtung zusammen und gewährleisten die Arbeit des Motors;
- M5, M6: sind Drehmomente, die unter der Einwirkung der Drehkräfte der Wellen 5 und 6 der Rotoren und der darauf unbeweglich aufgesetzten Zahnräder 15 und 16 in den Zeitperioden der Entzündung der Brennmischung und der Anfangsphase der Ausdehnung des Arbeitsmittels in der Verbrennungskammer 13 systematisch entstehen; sie fallen in der Richtung nicht zusammen und schaffen eine Gefahr für die Zahnräder 15 und 16 der Rotorwellen 5 und 6 und den entsprechenden Steuerzahnrädern 17 und 18 der Hauptwelle 19, aus dem Eingriff zu kommen; die Gefahr für die Zahnräder der Rotorwellen und der Hauptwelle, aus dem Eingriff zu kommen, nimmt mit der Vergrößerung des Verhältnisses zwischen den Abmessungen der großen Achse und der kleinen Achse der elliptischen Zahnräder zu. Dies begrenzt die Möglichkeiten, die Wirksamkeit der Motorarbeit zu erhöhen;
- M7, M8: sind Drehmomente, die unter der Einwirkung der Trägheit der Motorelemente entstehen, die sich schon drehen und diese Umdrehungen von der Hauptwelle 19 auf die Steuerzahnräder 17 und 18 übertragen; sie fallen in der Drehrichtung zusammen und tragen zur Sicherung einer stabilen Arbeit des Motors bei.

Die Aufgabe der Erfindung besteht darin, die Konstruktion des Verbrennungsmotors zur Erhöhung des Wirkungsgrads mittels eines zusätzlichen, steuernden Reduziergetriebes zu verbessern. Als Ergebnis der Erfindung muss gewährleistet werden:
1) das Erreichen eines optimal nahen Verdichtungsgrads der Arbeitsmischung in der Verdichtungs- und Verbrennungskammer bei der Produktion verschiedener Typen von Verbrennungsmotoren, die für den Einsatz eines konkreten Brennstoffes bestimmt sind (Benzin entsprechender Marken, Dieselbrennstoff, verflüssigtes Gas, Spiritus, andere Brennstoffe oder ihre Mischung);
2) eine sichere Ausführung der Funktion der Umwandlung der variablen Umlaufgeschwindigkeit der Rotorwellen 5 und 6 in eine gleichmäßige Drehgeschwindigkeit der Hauptwelle 19 des Motors;
3) eine Senkung des unproduktiven Leistungsverbrauchs zur Überwindung der Gegenwirkung von Drehmomenten der Rotorwellen 5 und 6, die in der entgegengesetzten Richtung bei der Entzündung der Brennmischung und bei raschem Druckanstieg des ausgedehnten Arbeitsmittels in der Verbrennungskammer auf die zwei benachbarten Schaufeln des Motors gerichtet sind;
4) die gegenseitige Stellung der Rotoren, der Wellen und der Zahnräder in einem vorgegebenen, statischen Vorstartzustand des Motors für dessen Anlauf und eine nachfolgende stabile Arbeit.

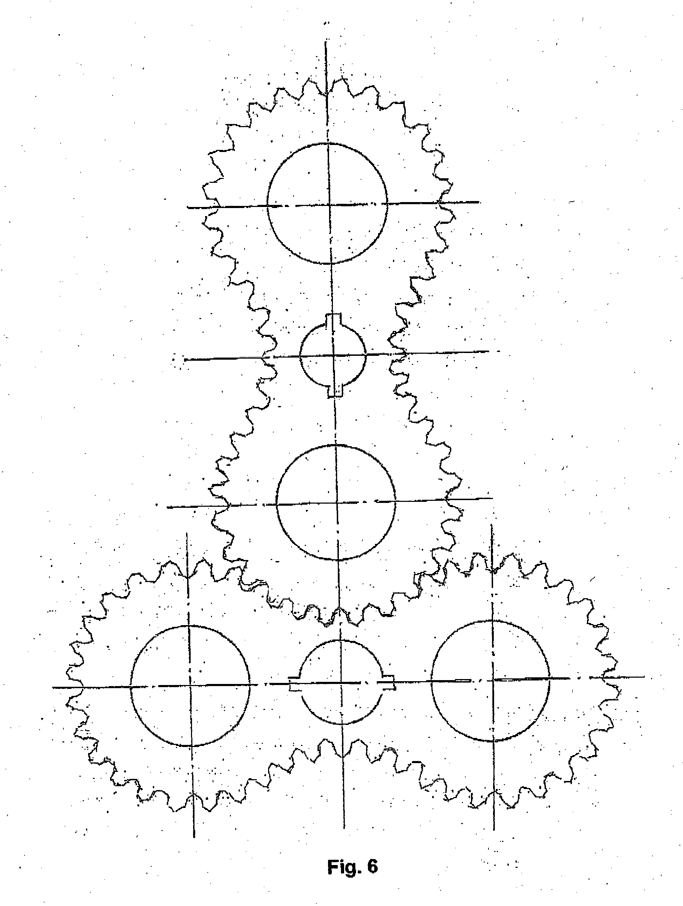

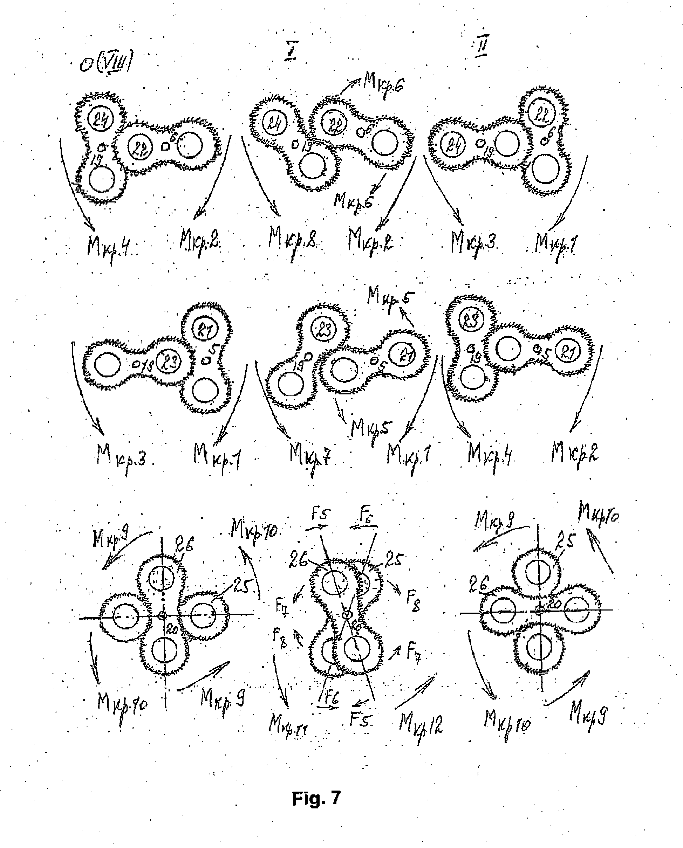

Die Zugabe des Reduziergetriebes gewährleistet im Vergleich mit dem Einsatz der elliptischen Zahnräder (zwei Paar nicht runder Zahnräder) folgende Vorteile.
1. Die verwendete Form der Zahnkränze der Zahnräder mit zwei Zahnkränzen als verknüpfte, konvex-konkave Bögen (Fig. 6) ermöglicht, den Bereich möglicher Verhältnisse zwischen den Abmessungen der großen Achse und der kleinen Achse der Zahnräder des Reduziergetriebes wesentlich zu erweitern. Die Verhältnisgrenze der Abmessungen der großen und kleinen Achse der Zahnräder ist zur Erreichung eines optimalen Verhältnisses zwischen den Abmessungen der Einsaugkammer 11, Verdichtungskammer 12, Verbrennungskammer und Auslasskammer 14 ausreichend. Folglich wird der optimale Verdichtungsgrad der Arbeitsmischung in der Verdichtungskammer 12 und der Verbrennungskammer 14 in der Entwicklung verschiedener Typen der Verbrennungsmotoren, die zum Einsatz eines konkreten Brennstoffs bestimmt sind (Benzin entsprechender Marken, Dieselbrennstoff, verflüssigtes Gas, Spiritus, andere Arten der Brennstoffe oder ihre Mischung) gewährleistet.
2. Die wichtigste Einheit des Reduziergetriebes gemäß der Erfindung ist die Hilfseinrichtung 20, 25, 26. Sie gewährleistet eine zuverlässige Übertragung der Drehmomente von den Rotorwellen 5 und 6 auf die Abtriebswelle im Laufe aller Phasen einer vollen Umdrehung der Hauptwelle 19. Dem Fachmann ist bekannt, dass die Paare der zusammenwirkenden Zahnäder mit zwei Zahnkränzen infolge der Selbstbremsung in bestimmten Stellungen selbständig nicht arbeiten können. Die Zugabe einer Hilfseinrichtung löst diese technische Aufgabe. Die Konstruktion der Elemente des Reduziergetriebes gemäß der Erfindung und der Mechanismus der Wechselwirkung dieser Elemente gewährleisten eine sichere Ausführung der Hauptfunktion des Mechanismus, nämlich der Umwandlung der variablen Umlaufgeschwindigkeit der Rotorwellen 5 und 6 in eine gleichmäßige Drehgeschwindigkeit der Motorhauptwelle 19.
3. Die Leistungsverluste des Motors sind auf ein Minimum (höchstens 3 - 7 %) gebracht. Die Gegenwirkung der nach der Zündung der Brennmischung entstehenden und in entgegengesetzte Richtungen wirkenden Drehmomente der Rotorwellen 5 und 6 wird mittels der Hilfseinrichtung systematisch ausgeglichen. In Fig. 7 ist der Mechanismus der Wechselwirkung der Zahnräder 21 und 22 der Rotorwellen 5 und 6, der Hauptwelle 19 und der Hilfseinrichtung im Beispiel der drei von acht Phasen der gegenseitigen Stellung der Zahnräder mit zwei Zahnkränzen im Laufe einer vollen Umdrehung der Wellen 5 und 6 des Reduziergetriebes dargestellt. Beim Wechsel der Drehphasen der Wellen 5 und 6 und der Zahnräder 21 und 22 wird simultan nicht nur das Niveau, sondern auch die Richtung der Drehmomente geändert, die abwechselnd von jeder der Rotorwellen 5 und 6 auf die Welle eines anderen Rotors mittels der Hilfseinrichtung übertragen werden. Somit wird die Gefahr des Bremsens oder des Rückdrehens einer der Rotorwellen verhindert und der unproduktive Energieverbrauch gesenkt.
4. Außerdem gewährleistet die Hilfseinrichtung die vorgegebene, relative Stellung der Rotoren, der Wellen und der Zahnräder im statischen Vorstartzustand des Motors. Dies ist für den Motoranlauf und die nachfolgende, stabile Arbeit besonders wichtig.

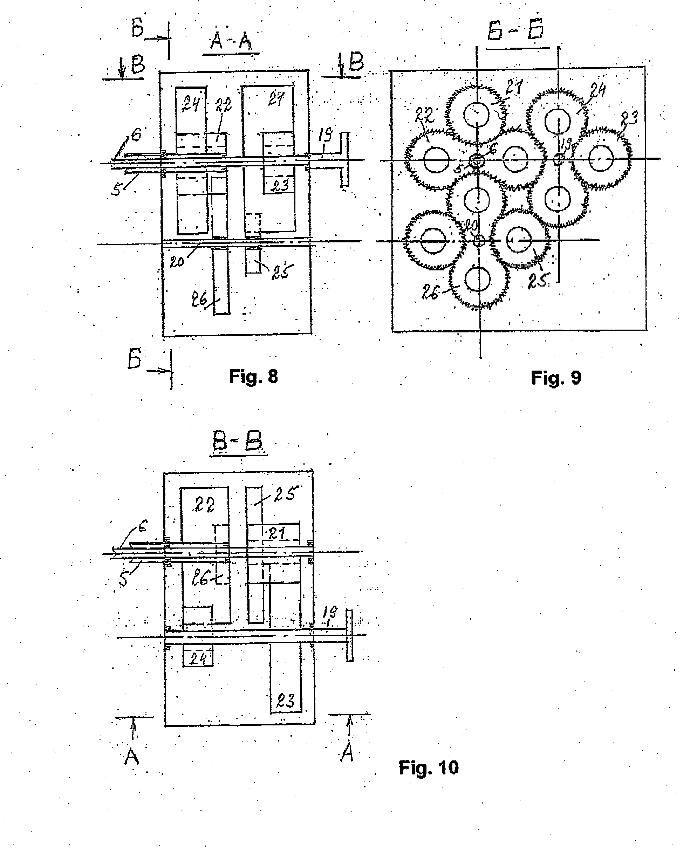

Die möglichen Ausführungsbeispiele des Umlaufmotors mit Schaufeln und Reduktionsgetriebe gemäß der Erfindung sind in den Figuren 8-10 schematisch dargestellt. Es sind folgende Bezeichnungen der Elemente und der Kräfte des Motors in Ergänzung zu den oben genannten verwendet:
- 20: ist die Welle der Hilfseinrichtung, wobei diese Welle 20 im Körper des Reduziergetriebes nach einer von zwei möglichen Ausführungen angeordnet ist:
1) unbewegliche Anordnung, bei der auf der Welle 20 zwei Hilfszahnräder 25 und 26 unter einem Winkel von 90° zueinander gelagert sind (nicht gezeigt); die Zahnräder 25 und 26 sind untereinander mit Hilfe von Federn entsprechender Elastizität oder mittels einer speziellen Torsionseinheit verbunden; jedes Zahnrad 25 bzw. 26 ist paarweise mit einem entsprechenden Zahnrad 21 bzw. 22 der Rotorwellen 5 und 6 kinematisch gekoppelt;
2) einzeln gelagerte Anordnung (nicht gezeigt), bei der auf der Welle 20 zwei Hilfszahnräder 25 und 26 unter einem Winkel von 90° zueinender unbeweglich angeordnet sind; jedes Zahnrad ist paarweise mit einem entsprechenden Zahnrad 21 bzw. 22 der Rotorwellen 5 und 6 kinematisch gekoppelt;
- 21: sind Zahnräder mit zwei Zahnkränzen, die auf der Welle 5 des ersten Rotors unter einem Winkel von 90° zueinander unbeweglich angeordnet sind; ein erstes Zahnrad 21 davon ist zur Sicherung der Wechselwirkung mit dem Zahnrad 23 der Hauptwelle 19 und das andere Zahnrad 21 zur Sicherung der Wechselwirkung mit dem Zahnrad 25 der Hilfseinrichtung 20 bestimmt;
- 22: sind Zahnräder mit zwei Zahnkränzen, die auf der Welle 6 des zweiten Rotors unter einem Winkel von 90° zueinander unbeweglich angeordnet sind; ein erstes Zahnrad 22 davon ist zur Sicherung der Wechselwirkung mit dem Zahnrad 24 der Hauptwelle 19 und das andere Zahnrad 22 zur Sicherung der Wechselwirkung mit dem Zahnrad 26 der Hilfseinrichtung 20 bestimmt;
- 23, 24: sind Steuerzahnräder mit zwei Zahnkränzen; diese Steuerräder sind auf der Hauptwelle 19 des Motors unter einem Winkel von 90° zueinander unbeweglich angeordnet. Diese Steuerräder 23 und 24 sind paarweise mit den entsprechenden Zahnrädern 21 oder 22 der Rotorwellen 5 und 6 kinematisch gekoppelt;
- 25, 26: sind zwei Zahnräder der Hilfseinrichtung; diese Zahnräder sind auf der Welle 20 nach einer der möglichen Ausführungen angeordnet:
1) gelagerte Anordnung (nicht gezeigt), bei der die Zahnräder 25 und 26 unter-einander unter einem Winkel von 90° zueinander mit Hilfe von Federn entsprechender Elastizität oder einer speziellen Torsionseinheit verbunden sind; sie sind paarweise mit einem entsprechenden Zahnrad 21 bzw. 22 der Rotorwellen 5 und 6 kinematisch gekoppelt;
2) unbewegliche Anordnung, unter einem Winkel von 90° zueinander, bei der die Zahnräder 25 und 26 paarweise mit einem entsprechenden Zahnrad 21 bzw. 22 der Rotorwellen 5 und 6 kinematisch gekoppelt;
- F5, F6: sind Kräfte, die durch die Wechselwirkung der Zahnräder 21 und 22 der Rotorwellen in den Figuren 8-10 mit den Zahnrädern 25, 26 der Hilfseinrichtung verursacht werden; diese Kräfte entstehen durch eine zusätzliche Belastung in den Zeitperioden nach der Zündung der Brennmischung, einer Ausdehnung des Arbeitsmittels in der Verbrennungskammer 13 des Motors und durch einen Druckanstieg auf zwei benachbarten Schaufeln der Rotoren; diese Kräfte schaffen eine Gefahr für die Zahnräder 21, 22 der Rotorwellen 5 und 6 und die entsprechenden, steuernden Zahnrädern 24, 24 der Hauptwelle 19, aus dem Eingriff zu kommen;
- F7, F8: sind Kräfte, die auf die Elemente der Hilfseinrichtung im Laufe der folgenden Phasen der Wechselwirkung der Zahnräder 25, 26 mit den Zahnrädern 21, 22 der Rotorwellen 5 und 6 in den Figuren 8-10 einwirken; sie gewährleisten eine systematische Übertragung der zusätzlichen Kräfte auf die entsprechenden Zahnräder 21, 22 der Rotorwellen 5 und 6 und dadurch auf die Zahnräder 23, 24 der Hauptwelle 19, tragen zur Motorarbeit bei und erhöhen die Motorleistung und den Motorwirkungsgrad;

- M9, M10, M11, M12: sind Drehmomente, die von der Wechselwirkung der Zahnräder 21 und 22 der Rotorwellen 5 und 6 in den Figuren 8-10 mit den Zahnrädern 25 und 26 der Hilfseinrichtung 20 verursacht werden; sie fallen in der Richtung zusammen und tragen zur Sicherung einer stabilen Motorarbeit bei.

Aufgrund der genannten Vorteile sichert der Umlaufmotor mit Schaufeln und Reduktionsgetriebe gemäß der Erfindung die Erhöhung des Wirkungsgrads auf 85 - 95 %. Im Vergleich dazu verfügen Kolbenmotoren über diesen Parameter einen Wirkungsgrad in Höhe von 35 - 45 % und die meisten, anderen Umlaufmotoren höchstens in Höhe von 50 - 60 %. Dementsprechend verringert sich der spezifische Brennstoffverbrauch des Umlaufmotors gemäß der Erfindung um das 1,5-1,8-fache im Vergleich zu den am meisten verbreiteten Kolbenmotoren, und die spezifische Materialintensität sinkt um 30 - 40 %.

Alle vier Arbeitszyklen des Motors gemäß der Erfindung laufen in den unterschiedlichen räumlichen Motorzonen (Kammern) gleichzeitig ab. Sie werden mittels der gegenseitigen Stellung der Rotorschaufeln innerhalb des Arbeitszylinders des Stators gebildet. Die summarische, spezifische Dauer des Arbeitsgangs der Rotoren erhöht sich auf das 3,5-4-fache im Vergleich zu Kolbenmotoren. Folglich ermöglicht das gleiche Gesamthubvolumen des Motors, die gleiche Leistung bei niedrigen Umdrehungszahlen zu erreichen. Oder im Gegenteil besteht die Möglichkeit, das Gesamthubvolumen und die Abmessungen des Motors mit derselben Leistung unter Beibehaltung der Drehzahl des Motors pro Zeiteinheit entsprechend zu vermindern. Die relative Vergrößerung der Dauer des Arbeitgangs vermindert die Forderungen an die Oktanzahl der Brennstoffmischung. Dies ermöglicht, weniger teure Brennstoffe wirksamer zu verwenden und sichert eine Senkung der Umweltverschmutzung mit schädlichen Stoffen. Die Zuverlässigkeit und Lebensdauer des Umlaufmotors mit Schaufeln und Reduktionsgetriebe gemäß der Erfindung wird erhöht.

Die Hauptkomponenten des Motors der Konstruktion gemäß der Erfindung sind:
1) ein Statorblock mit einer zylindrischen Innenoberfläche und Deckeln, mit Einrichtungen zur Zufuhr der Brennstoffmischung, zur Zündung und Ableitung der Gase, Abkühlung und Schmierung;
2) zwei auf einer Achse angeordnete Rotoren mit zwei Schaufeln;
3) ein steuerndes Reduziergetriebe, das aus einer Hauptwelle 19, den Rotorwellen 5 und 6 und der Welle20 einer Hilfseinrichtung besteht; auf den Wellen des Reduziergetriebes sind Zahnräder mit zwei Zahnkränzen angeordnet; der Zahnkranz hat die Form verknüpfter, konvexer und konkaver Bögen; der Eingriff gewährleistet die kinematische Wechselwirkung der Zahnräder 21, 22 der Rotor-wellen 5, 6 mit den Zahnrädern 17, 18 der Hauptwelle 19 und den Zahnrädern 25, 26 der Hilfseinrichtung.

Die Arbeitsfähigkeit des Motors wird durch folgende Systeme gewährleistet:
1) System des Anlaufs;
2) System der Aufbereitung und Zufuhr der Brennmischung;
3) System der Zündung;
4) System der Abkühlung;
5) System der Schmierung.

Diese Systeme sind den ähnlichen Systemen anderer Motoren analog, aber im Vergleich dazu wesentlich einfacher. Ein Gasverteilungsmechanismus fehlt, da er überflüssig ist. Die Brennstoffmischung der Vergasermotoren und die Luft der Dieselmotoren werden durch entsprechende Einlassöffnungen7 im Block oder in den Deckeln des Blocks in die Einlasskammer 11 eingesaugt. Die Abgase werden in die Auslasskanäle durch entsprechende Auslassöffnungen8 im Block oder in den Deckeln des Blocks beim Drehen der Rotorschaufeln 1-4 hinausgestoßen. Die Rotorschaufein 1-4 arbeiten während der Arbeit wie eine Pumpe.

Die Zugabe der zusätzlichen Einlassöffnung 7 und Auslassöffnung 8 mit Ventilen im Stator, die in bestimmten Punkten der Verdichtungskammer 12 und Verbrennungskammer 13 ausgeführt werden, ermöglicht zwei Paar der Einlasskammer 11 und Auslasskammer 14 zu bilden, abzugrenzen und gleichzeitig arbeiten zu lassen. Dies kann die Arbeit des Motors im doppelten Zweitaktbetrieb einer Turbine gewährleisten. Dieser Betrieb kann zum Erreichen der benötigten Motordrehzahl beim Anlassbetrieb und als Redundanzbetrieb mit Vorbehalt einer systematischen Zufuhr des Arbeitsmittels von einer äußeren Energiequelle (beispielsweise Druckluft) verwendet werden. Die Zündung der Mischung in Vergasermotoren oder das Einspritzen des Brennstoffs in Dieselmotoren wird wie in üblichen Kolbenmotoren mittels einer Zündkerze oder einer Düse verwirklicht, die im Gehäuse oder Gehäusedeckel des Umlaufmotors angeordnet ist. Möglich ist für die Brennstoffmischung die Verwendung sowohl einer konventionellen als auch einer Glühzündkerze 9.

Die konkrete Motorausführung kann vom Hersteller aufgrund der Anwendung des Umlaufmotors gemäß der Erfindung je nach dem technologischen Niveau, der vorgegebenen Leistung und dem Bestimmungszweck gewählt werden. Die auf einer Achse angeordneten Zwei-Schaufel-Rotoren können nach einem der beiden folgenden Beispiele angeordnet werden:
1) nacheinander, entlang der Achse des inneren Arbeitszylinders des Blocks;
2) ein Rotor in einem anderen, um die allgemeine, unbewegliche, zentrale Drehachse des Motors.

Geändert werden kann auch die Position des Reduziergetriebes gemäß der Erfindung:
1) im einheitlichen Block neben dem Stator und den Rotoren;
2) als eine abgesonderte Vorrichtung. In diesem Fall muss ein entsprechender Mechanismus zur Befestigung und Übertragung der Drehmomente von den Rotoren zu den Wellen und Zahnrädern des Reduziergetriebes, zur Zufuhr der Brennmischung und Ableitung der Abgase, zur Verdichtung der beweglichen Elemente zwecks Sicherung einer vorgegebenen Kompression in der Einlasskammer, Verdichtungskammer, Verbrennungskammer und Auslasskammern vorgesehen werden.

Ein Ausführungsbeispiel des Reduziergetriebes gemäß der Erfindung ist in den Figuren 8-10 dargestellt. Um ein Durchkreuzen der Steuerzahnräder 23, 24 der Hauptwelle 19 mit den entsprechenden Zahnrädern 25, 26 der Hilfseinrichtungen zu verhindern, werden diese in verschiedenen Drehflächen angeordnet. Um eine stabile Wechselwirkung der Elemente zu gewährleisten, wird jedes Zahnrad 21 bzw. 22 der Rotorwellen 5 und 6 etwas stärker als die Stärkensumme des Zahnrads 23 bzw. 24 der Hauptwelle 19 und des entsprechenden Zahnrads 25 oder 26 der Hilfseinrichtung hergestellt.

Rational ist die Ausführung mit einer Teilung der Zahnräder 21 und 22 der Rotorenwellen 5 und 6 in zwei Teile. Die Stärke des Körpers jedes Zahnrads 21, 22 soll der Stärke des entsprechenden Zahnrades 23 oder 24 der Hauptwelle 19 oder des Zahnrades 25 oder 26 der Haupteinrichtung entsprechen. Dies vereinfacht das Läppen der glatten Arbeitsoberflächen der Kränze jedes zusammenwirkenden Zahnradpaars bei der Herstellung.

Also werden auf jeder Welle 5 und 6 der Rotoren nicht ein sondern zwei Zahnräder mit zwei Zahnkränzen unbeweglich angeordnet. Sie haben die gleiche Form und gleiche Außenabmessungen. Die Stärke des Körpers jedes zusammenwirkenden Zahnradpaars soll entsprechend sein. Die Anordnung von je zwei Zahnrädern auf jeder Welle 5 und 6 der Rotoren unbeweglich und unter einem Winkel von 90° zueinander ermöglicht, die Welle 20 der Hilfseinrichtung nicht unter den Rotorenwellen 5 und 6, sondern mit horizontal mit diesen Rotorwellen 5 und 6 anzuordnen. Dies erhöht die Stabilität der dynamischen Charakteristiken, verringert die Höhenabmessungen und verbessert das Schmieren der Teile des Reduziergetriebes. Die kompakte Konstruktion des Motors wird durch die Anordnung des Statorblocks mit den Rotoren unmittelbar über dem Reduziergetriebe erreicht. Dabei kann das Gehäuse des Reduziergetriebes als Motorbasis verwendet werden.

## Patentansprüche

1. Rotationsverbrennungsmotor, der einen Stator, zwei auf einer Achse liegende Rotoren mit je zwei Schaufeln (1, 3 bzw. 2, 4) und ein Reduziergetriebe umfasst, wobei das Reduziergetriebe aus zwei auf einer Achse liegenden Wellen (5, 6) von Rotoren besteht, die zwischen einer Hauptwelle (19) und einer Welle (20) einer Hilfseinrichtung angeordnet sind,
**dadurch gekennzeichnet,**
**dass** auf jeder Welle (5, 6) des Reduziergetriebes zwei Zahnräder (21, 22) unter 90° zueinander verdreht angeordnet sind,
**dass** die Zahnkränze der Zahnräder (21, 22) die Form von verknüpften konvexen und konkaven Bögen aufweisen, wobei die zwei konkaven Bögen bezüglich der Mitte entlang der kleinen Zahnradachse symmetrisch angeordnet sind, dass die große und die kleine Achse jedes Zahnrades (21, 22) unter einem Winkel von 90° zueinander stehen,
**dass** die Zahnräder auf jeder Welle des Reduziergetriebes paarweise so angeordnet sind,
**dass** die große und die kleine Achse eines Zahnrades bezüglich der gleichen Achsen des anderen Zahnrades unter einem Winkel von 90° zueinander liegen,
**dass** jedes Zahnrad (21, 22) der Wellen (5, 6) der Rotoren sich in einer Ebene paarweise mit entsprechenden Zahnrädern (23, 24) der Hauptwelle (19) oder der Welle (20) der Hilfseinrichtung drehen,
**dass** der Eingriff der Zahnräder die kinematischen Verkopplung der Zahnräder (21, 22) der Wellen (5, 6) der Rotoren mit den entsprechenden Zahnrädern (23, 24) der Hauptwelle (19) oder mit den Zahnrädern (25, 26) der Hilfseinrichtung gewährleisten und
**dass** dadurch die Drehmomente (M1 .. M) von den Wellen (5, 6) der Rotoren auf die Hauptwelle (19) des Motors übertragbar sind.

2. Rotationsverbrennungsmotor (Umlaufmotor) nach Anspruch 1,
**dadurch gekennzeichnet,**
**dass** auf jeder Welle (5, 6) der Rotoren zwei Zahnräder (21, 22) mit zwei Zahnkränzen unbeweglich angeordnet sind,
**dass** die Zahnräder (21, 22) die gleiche Form und die gleichen Außenabmessungen aufweisen,
**dass** die Stärke des Körpers jedes zusammenwirkenden Zahnradpaares gleich ist,
**dass** die unbewegliche Anordnung von je zwei Zahnrädern (21, 22) auf jeder Welle (5, 6) der Rotoren unter einem Winkel von 90° zueinander vorgenommen ist und
**dass** die Welle (20) der Hilfseinrichtung horizontal zu den Wellen (5, 6) der Rotoren angeordnet ist.

## Claims

1. A rotary combustion engine, which includes a stator, two rotors located on the same axis, each having two blades (1, 3; 2, 4) and a reducing gear, the reducing gear comprising two shafts (5, 6) of rotors, the shafts being located on the same axis and being disposed between a main shaft (19) and a shaft (20) of an auxiliary device,
**characterized in that**
on each shaft (5, 6) of the step-down gear, two gear wheels (21, 22) are disposed, rotated by 90° from each other;
that the gear rings of the gear wheels (21, 22) are in the form of two linked convex and concave curves, the two concave curves being disposed symmetrically relative to the center along the short gear wheel axis;
that the long and the short axis of each gear wheel (21, 22) are at an angle of 90° to each other; that the gear wheels on each shaft of the step-down gear are disposed in pairs such that the long and the short axis of one gear wheel is at an angle of 90° to the same axes of the other gear wheel;
that each gear wheel (21, 22) of the shafts (5, 6) of the rotors rotate in pairs in the same plane with the corresponding gear wheels (23, 24) of the main shaft (19) or with the gear wheels (25, 26) of the auxiliary device; and
that as a result, the torques (M1, ..., M) of the shafts (5, 6) of the rotors are transmissible to the main shaft (19) of the engine.

2. The rotary combustion engine (rotary engine) of claim 1,
**characterized in that**
two gear wheels (21, 22) with two gear rings are disposed immovably on each shaft (5, 6) of the rotors;
that the gear wheels (21, 22) have the same shape and the same external dimensions;
that the thickness of the body of each cooperating pair of gear wheels is the same;
that the immovable disposition of two gear wheels (21, 22) each on each shaft (5, 6) of the rotors is done at an angle of 90° to each other; and
that the shaft (20) of the auxiliary device is disposed horizontally to the shafts (5, 6) of the rotors.

## Revendications

1. Moteur rotatif à combustion interne, qui comprend un stator, deux rotors coaxiaux pourvus chacun de deux pales (respectivement 1, 3 ou 2, 4) et un réducteur, sachant que le réducteur est constitué de deux arbres de rotors (5, 6) coaxiaux, qui sont disposés entre un arbre principal (19) et un arbre (20) d'un dispositif auxiliaire, **caractérisé en ce que** deux roues dentées (21, 22) sont disposées sur chaque arbre (5, 6) du réducteur en étant tournées à 90° l'une par rapport à l'autre,
**en ce que** les couronnes dentées des roues dentées (21, 22) présentent la forme d'arcs convexes et concaves conjugués, sachant que les deux arcs concaves sont disposés symétriquement par rapport au centre le long du petit axe de la roue dentée,
**en ce que** le grand axe et le petit axe de chaque roue dentée (21, 22) se trouvent sous un angle de 90° l'un par rapport à l'autre,
**en ce que** les roues dentées sont, sur chaque arbre du réducteur, disposées par paires de telle sorte que le grand axe et le petit axe d'une roue dentée se trouvent sous un angle de 90° par rapport aux mêmes axes de l'autre roue dentée,
**en ce que** chaque roue dentée (21, 22) des arbres (5, 6) des rotors tourne dans un plan par paire avec des roues dentées correspondantes (23, 24) de l'arbre principal (19) ou de l'arbre (20) du dispositif auxiliaire,
**en ce que** l'engrènement des roues dentées assure le couplage cinématique des roues dentées (21, 22) des arbres (5, 6) des rotors avec les roues dentées correspondantes (23, 24) de l'arbre principal (19) ou avec les roues dentées (25, 26) du dispositif auxiliaire,
et **en ce que** les couples de rotation (M1 .. M) peuvent ainsi être transmis des arbres (5, 6) des rotors à l'arbre principal (19) du moteur.

2. Moteur rotatif à combustion interne selon la revendication 1, **caractérisé**
**en ce que** deux roues dentées (21, 22) avec deux couronnes dentées sont disposées à poste fixe sur chaque arbre (5, 6) des rotors,
**en ce que** les roues dentées (21, 22) présentent la même forme et les mêmes dimensions extérieures,
**en ce que** l'épaisseur du corps de chaque paire de roues dentées coopérantes est identique,
**en ce que** la disposition à poste fixe de deux roues dentées respectives (21, 22) sur chaque arbre (5, 6) des rotors est effectuée sous un angle relatif de 90°,
et **en ce que** l'arbre (20) du dispositif auxiliaire est disposé horizontalement par rapport aux arbres (5, 6) des rotors.
